Europäisches Patentamt

European Patent Office

Office européen des brevets

(19)

(11) Publication number: **0 095 148**
A2

# (12) EUROPEAN PATENT APPLICATION

(21) Application number: 83104975.4

(22) Date of filing: 19.05.83

(51) Int. Cl.³: **G 03 B 17/30**

(30) Priority: 21.05.82 JP 84961/82

(43) Date of publication of application:
30.11.83 Bulletin 83/48

(84) Designated Contracting States:
DE GB NL

(71) Applicant: KONISHIROKU PHOTO INDUSTRY CO. LTD.
No. 26-2, Nishishinjuku 1-chome Shinjuku-ku
Tokyo 160(JP)

(72) Inventor: Yanagisawa, Akira
No. 1515, Kusabana
Akigawa-Shi Tokyo(JP)

(72) Inventor: Iino, Chuuji
No. 2263-21, Fussa
Fussa-Shi Tokyo(JP)

(72) Inventor: Ikariya, Toshiyuki
No. 4-4-19, Ohwada-Cho
Hachioji-Shi Tokyo(JP)

(72) Inventor: Takahashi, Kiyohiko
No. 2-5-19, Ohwada-Cho
Hachioji-Shi Tokyo(JP)

(74) Representative: Patentanwälte Henkel, Pfenning,
Feiler, Hänzel & Meinig
Möhlstrasse 37
D-8000 München 80(DE)

(54) Spool for photographic film.

(57) A spool for photographic film (1) wherein a film-insertion slit (5) is provided between two flanges (4, 4') of a winding shaft (3) for attaching the end of the film (1) and winding the film (1) thereon, and two engagement pawls (9, 10) are provided separately from each other in the axial direction of the winding shaft (3), while a comparatively narrow film-presser rib (8) is provided in part of the other wall facing the first wall between the two engagement pawls (9, 10). Each of the engagement pawls (9, 10) has an inclined part ascending toward the other wall gradually in the direction of film-insertion, and a horizontal pawl part continuing from the inclined part. Each of the horizontal pawl parts is shaped in accordance with part of a virtually oval engagement hole (2, 2') formed in the end of the film (1), and has a film engagement section inclined toward the first wall and toward the film-insertion side of the slit (5) and is separated a distance from the first wall slightly larger than the thickness of the film (1). The film-presser rib (8) has an inclined surface descending toward the first wall gradually in the direction of film-insertion, and a horizontal surface continuing from the inclined surface.

## SPOOL FOR PHOTOGRAPHIC FILM

The present invention relates to a spool for photographic film, which improves in the film-spool attachment strength.

Various kinds of photographic film are used nowadays. Of them, the so-called 35mm film (No. 135 when in a cartridge) which is used for 35mm camaras or so-called half-size cameras is set in such a manner that the end thereof is attached to a spool provided rotatably in a cylindrical cartridge.  Among the conventional systems for attaching the end of the film to the spool, the following systems are known: a system wherein a sheet of adhesive paper with an adhesive agent applied onto one surface thereof is rolled around the spool and the end of film is attached between the ends of the adhesive paper, and a system wherein engagement holes made in the end of the film are engaged with engagement pawls formed on the winding shaft of the spool.  The critical force in which the film disengages from the spool due to damage, etc. when the film attached to the spool is pulled in the longitudinal direction thereof, i.e. the film-spool attachment strength of the former system is much larger than the latter.  This system has such problems, however, that the film is partially stained by the adhesive agent, that the process wherein the end of the film is held between the ends of the adhesive paper is complicated, and that the adhesive force is deteriorated by the variances with time of the adhesive agent.

Reference will be made to the latter system using no adhesive paper.  There are two variations of this kind of system which has so far been adopted.  In one of them the attachment is made by using one engagement pawl, and in the other by using two engagement pawls.  In either method, the engagement pawl or pawls are provided on the winding shaft of the spool, the end of the film at which one or two engagement holes is formed is inserted through an inlet slit provided in the winding shaft of the spool.  The film is bent gradually by a projection provided inside the shaft, and the engagement hole(s) of the film is engaged with the engagement pawl(s) when the film has been inserted some distance into the slit.  Then the film is restored to its original flat state by a restoring force accumulated till then by bending, and thereby the film is attached to the spool.

In the attachment system of this kind, it is important that (1) the film-spool attachment strength is large, (2) the film is inserted easily and surely, and (3) the film does not disengage from the spool after it has been inserted. The system which has so far been known has an inferior film-spool attachment strength to that in the system using adhesive paper, described above, and the system using two engagement holes has the problem that one of the engagement pawls is liable to disengage from the corresponding engagement hole.

In view of the above problems, the present invention proposes a spool satisfying the above three requirements, based on the theoretical analysis of the shape and dimensions of the engagement pawls of the spool and the engagement holes of the film, and on experimental confirmation thereof. The spool proposed by the present invention is formed in such a manner that a film-insertion slit is provided in the winding shaft of the spool, and that two engagement pawls are provided separately from each other in the axial direction of the winding shaft, in part of one of the upper and lower walls of the film-insertion slit and facing the other wall, while a relatively narrow film-presser rib is provided in part of the other wall facing the first wall, between the two engagement pawls. Each

- 4 -                    0095148

engagement pawl has an inclined part ascending toward the other wall gradually in the direction of film-insertion, and a horizontal pawl part continuing from the inclined part. This horizontal pawl part is shaped in accordance with part of a vertually oval engagement hole formed in the end of the film, and has a film engagement section inclined toward the first wall and toward the film-insertion side of the slit, and is separated a distance slightly larger than the thickness of the film from the first wall. The film-presser rib has an inclined surface descending toward the first wall gradually in the direction of film-insertion, and a horizontal surface continuing from the inclined surface.

Other purposes and characteristics of the present invention will be explained hereinafter with reference to drawings.

Figure 1 is a drawing illustrating the shapes of the ends of a film to be attached to a spool for photographic film which is proposed by the present invention;

Figure 2 is a perspective view of an embodiment of the spool proposed by the present invention;

Figure 3 is a perspective view of the same spool from which the upper rib and upper wall are removed;

Figure 4 is a front view of the same spool;

Figure 5 is a plan view of the same spool from which the upper rib and the upper wall are removed;

Figure 6 is a back view of the same spool;

Figure 7 is a section taken along the line VII-VII of Figure 4;

Figure 8 is a section taken along the line VIII-VIII of Figure 4;

Figure 9 is a perspective view of an engagement pawl formed in the same spool; and

Figure 10 is a section taken along the line X-X of Figure 9.

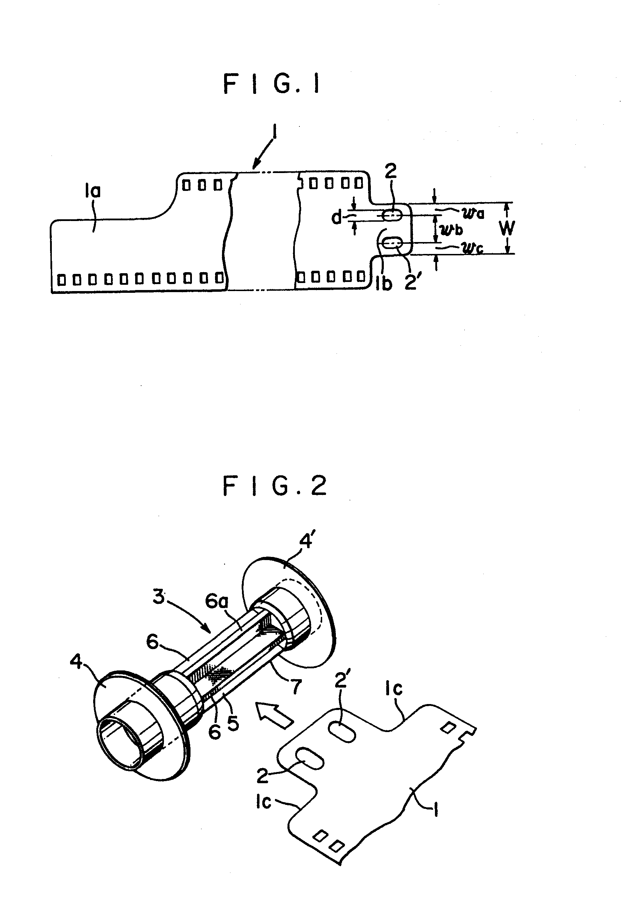

In Figure 1, showing the shapes of the ends of a film to be attached to the spool for photographic film proposed by the present invention, a front end 1a is a narrow part to be inserted into a slot of a take-up reel when the film is loaded, while a rear end 1b serves as an attachment part to the spool, which will be described later. The attachment part 1b, having a width W of 15 - 17 mm, is provided with two engagement holes 2 and 2', which are recommended to have an oval or elliptical shape for easy engagement with engagement pawls, preferably an oval shape for reasons of preparation. In either of these shapes, it is preferable that the minor axis d of the engagement holes 2 and 2' is within $0.15 \leqq d/w \leqq 0.3$, determined by theoretical analysis, so as to increase the film-spool attachment strength. In order to obtain a large film-spool attachment strength, it is effective that the engagement holes 2 and 2' are positioned in the film so as to meet the ratio of $w_a : w_b : w_c = 1 : 2 : 1$ when widths $w_a$, $w_b$ and $w_c$ are as shown in the figure. In addition, the difference between the width of the engagement holes 2 and 2' and the width of the engagement pawls of the spool, which will be described later, is recommended to be less than 1 mm.

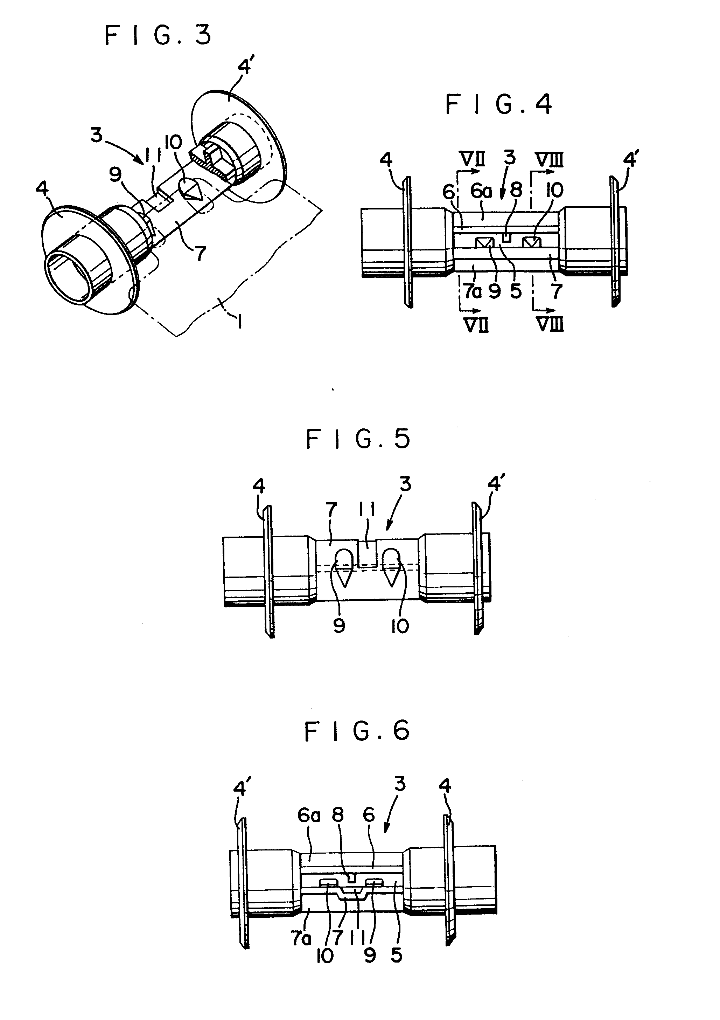

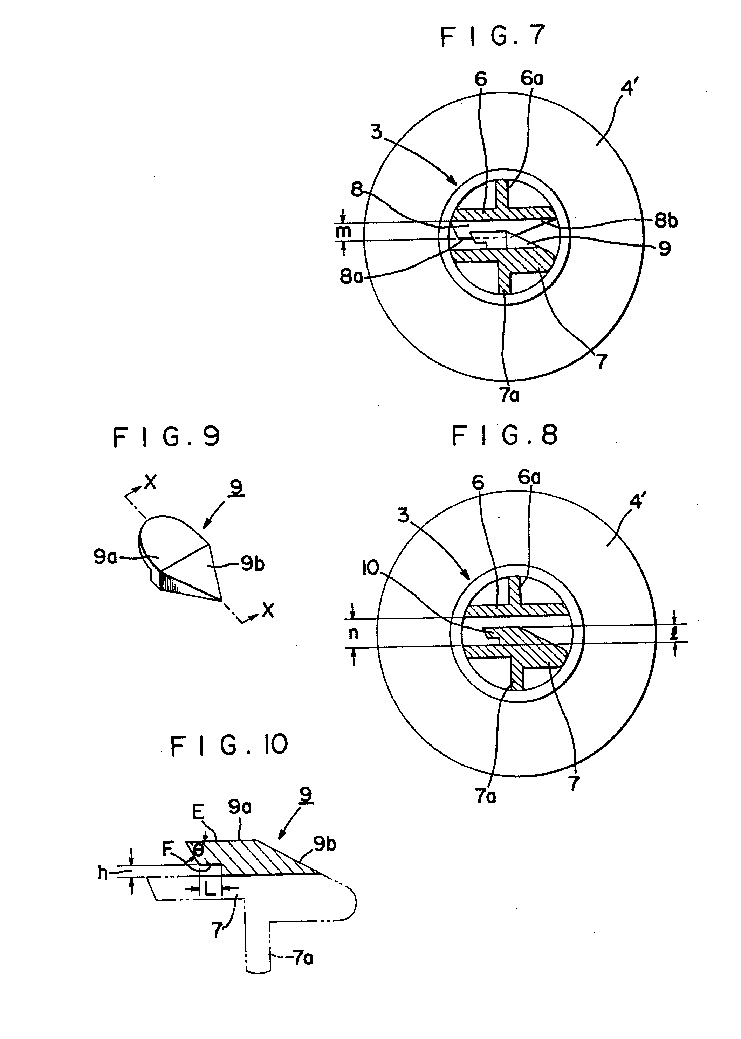

Figures 2 to 8 show the structure of the film spool according to the present invention. Figure 2 is a perspective view of the spool, Figure 3 is a perspective view of the spool with part of which removed, Figure 4 is a front view of the spool, Figure 5 is a plan view of the spool with part of which removed, Figure 6 is a back view of the same spool, Figure 7 is a section taken along the line VII-VII of Figure 4, and Figure 8 is a section taken along the line VIII-VIII of Figure 4.

As can be seen from these figures, the spool is provided with flanges 4 and 4', which are located near each end of a winding shaft 3 around which the film is rolled. The spool is also provided with a film-insertion slit 5, which is located in a part of the winding shaft 3 between the two flanges 4 and 4'. The film insertion slit 5 is formed through the winding shaft 3 and pierces the shaft at right angles to the axial line thereof. Of upper and lower walls forming the insertion slit 5, the upper wall 6 is provided with a film-presser rib 8 formed nearly in the center of the longitudinal direction of the insertion slit 5, while the lower wall 7 is provided with two engagement pawls 9 and 10.  A concavity 11 is formed between these engagement pawls.  Ribs 6a and 7a extending along the length of the spool are provided nearly in the center of the outside of the upper and lower walls 6 and 7, respectively.

The engagement pawls 9 and 10 have the same shape, an enlarged view of the pawl 9 is shown in Figure 9, while a section thereof taken along the line X-X is shown in Figure 10.  The engagement pawl 9 has a pawl part 9a extending horizontally, and an inclined part 9b ascending gently and gradually toward the upper wall 6 from the film-insertion side.  The pawl part 9a has a slanting end whose angle of inclination $\theta$ is less than 90 degrees, and preferably about 60 degrees.  An end thus inclined facilitates the engagement of the film with the pawl part 9a.  The lower surface F of the pawl part 9a is formed parallel to the upper surface E thereof in the horizontal direction.  The distance h from the lower wall 7 to the lower surface F of the pawl part 9a is preferably made to be slightly larger than the thickness (about 0.15 mm) of the film, i.e. at least 0.3 mm, in view of the life of the forming mold, etc.  It has been confirmed by experiments, however, that the film-spool attachment strength decreases as the distance h increases. In addition, it has also been confirmed by experiments that the film-spool attachment strength decreases sharply when the length L in the horizontal direction of the lower surface F of the pawl part 9a is less than 1 mm. This means that the length L in the horizontal direction is recommended to be at least 1 mm, preferably 1 mm. The inclined part 9b of the engagement pawl 9 has an angle of inclination of preferably about 25 degrees to the lower wall 7, and the length along the inclined surface is preferably about 5 mm.

The film-presser rib 8 formed on the upper wall 6 has a horizontal part 8a and an inclined part 8b descending gently and gradually toward the lower wall 7 from the film-insertion side. This presser rib 8 prevents the film from disengaging from the engagement pawls after it has been engaged therewith, and the inclined part 8b, together with the inclined parts of the engagement pawls, bends the central part of the film gradually when the film is inserted, thus applying a downward force to the engagement part 1b of the film. Accordingly, the function of preventing the disengagement decreases when the height of the presser rib 8 is too small, while its resistance against the insertion of film becomes large when it is too large. In addition, the height m of the presser rib should also be fixed in relation to the height n of the film-insertion slit, and thus it is preferable to provide the following relations between them when the height of the engagement pawls is $\ell$.

$$n : m \doteqdot 1.4 - 1.8 : 1$$
$$\ell : m \doteqdot 0.8 - 1.2 : 1$$

And most preferably,

$$n : m \doteqdot 1.6 : 1$$
$$\ell : m \doteqdot 1 : 1$$

Based on the results of experiments, the values of n and m have been fixed at 2.3 mm and 1.5 mm, respectively. Experiments also show that the width of the presser rib 8 of this embodiment has an effect on its resistance against the insertion of the film, that is, the resistance against insertion increases as the width is increased. In view of the results of the experiments, the width has been fixed at 1.2 mm in the present embodiment.

When the attachment part 1b of the film 1 shown in Figure 1 is inserted into the film-insertion slit 5 of a spool with the shape and structure described above in the direction of the arrow in Figure 2, portions near the both sides of the attachment part 1b of the film are guided upward along the inclined parts of the engagement pawls 9 and 10 (e.g. along 9b of the engagement pawl 9), while the central part thereof is guided downward along the inclined surface 8b of the presser rib 8, and thus the attachment part 1b is put in a state that it is bent and pressed downward. When the film 1 is inserted further, the inclined parts of the engagement pawls 9 and 10 start to engage with the engagement holes 2 and 2' of the film, and when shoulder parts 1c of the film 1 are inserted as far as positions at which they touch both end parts of the winding shaft 3 of the spool, the engagement holes 2 and 2' of the film 1 engage with the engagement pawls 9 and 10 by the force of restoration of the bent film itself. At this time, the film is easily engaged with the engagement pawls, because the ends of the pawl parts are inclined, and thus it is set simply in the position shown by the dot- and dash-line in Figure 3. The film is attached firmly to the spool in this way, and it is held firmly by the presser rib 8 after being engaged.

The results of experiments on the film-spool attachment strength of the film conducted using the spool proposed by the present invention show that film-spool attachment strength of 11.3 kg and 10.6 kg are obtained for negative and reversal films, respectively. These values are nearly twice as large as those of the film-spool attachment strength obtained by the conventional pawl attachment system, and thus it is apparent that a large film-spool attachment strength can be obtained.

As described above, the present invention proposes a spool constituted in such a manner that, in a spool for photographic film having a winding shaft for attaching the end of the film and winding the film thereon and a pair of flanges checking the movement of the film wound round said winding shaft, in the axial direction of the shaft, a film insertion slit is provided between the two flanges of the winding shaft, and two engagement pawls are provided separately from each other in the axial direction of the winding shaft, in part of one of the upper and lower walls of said film-insertion slit facing the other wall, while a comparatively narrow film-presser rib is provided in part of the other wall facing the first wall between said two engagement pawls; each of said engagement pawls has an inclined part ascending toward the other wall gradually in the direction of film-insertion and a horizontal pawl part continuing from said inclined part; each of said horizontal pawl parts is shaped in accordance with part of a nearly oval engagement hole formed in the end of the film, and has a film engagement section inclined toward the first wall and toward the film-insertion side of the slit, and is separated a distance from the first wall slightly larger than the thickness of the film; and said film-presser rib has an inclined surface descending toward the first wall gradually in the direction of film-insertion, and a horizontal surface continuing from said inclined surface. By this constitution, the film is attached easily and surely to the spool, without disengaging therefrom after attachment. Moreover, the film-spool attachment strength obtained when the film is attached to the spool is increased markedly in comparison with that obtained by a conventional pawl engagement system of this kind, being equal to that obtained by an attachment system wherein adhesive paper is used.

There is also the effect that tearing of the film can be prevented by rounding off the side edge of one wall of the film-insertion slit.

- 13 -  0095148

CLAIMS:

1. In a spool for photographic film 1 having a winding shaft 3 for attaching the end of the film 1 and winding the film 1 thereon, and a pair of flanges 4, 4' for checking the movement of the film 1 wound round said winding shaft 3, in the axial direction of the shaft 3, the improvement wherein a film-insertion slit 5 is provided between the two flanges 4, 4' of said winding shaft 3, and two engagement pawls 9, 10 are provided separately from each other in the axial direction of the winding shaft 3, in part of one of the upper and lower walls 6, 7 of said film-insertion slit 5 facing the other wall, while a comparatively narrow film-presser rib 8 is provided in part of the other wall facing the first wall between said two engagement pawls 9, 10; wherein each of said engagement pawls 9, 10 has an inclined part ascending toward the other wall gradually in the direction of film-insertion, and a horizontal pawl part continuing from said inclined part; wherein each of said horizontal pawl parts is shaped in accordance with part of a virtually oval engagement hole 2, 2' formed in the end of the film 1, and has a film engagement section inclined toward the first wall and toward the film-insertion side of the slit 5 and is separated a distance from the first wall slightly larger than the thickness of the film 1; and wherein said film-presser rib 8 has an inclined surface descending toward the first wall gradually in the direction of film-insertion, and a horizontal surface continuing from said inclined surface.

2. The spool for photographic film according to claim 1, in that the side edge of the first wall, on the film-insertion side, is rounded off.

3. The spool for photographic film according to claim 1, in that the distance from the lower wall 7 to the lower surface of the pawl part 9a is not less than 0.3 mm.

FIG.1

FIG.2

2/5

FIG. 3

FIG. 4

FIG. 5

FIG. 6

F I G. 7

F I G. 9

F I G. 8

F I G. 10